# EUROPÄISCHE PATENTANMELDUNG

(11) **EP 0 780 706 A2**
(43) Veröffentlichungstag der Anmeldung: **25.06.1997**
(21) Anmeldenummer: 96250258.9
(22) Anmeldetag: 12.11.1996
(51) Int. Cl.: G01V 3/15

(54) **Vorrichtung zur Ortung von im Boden verborgener Munition**

(30) Priorität: 19.12.1995 DE 19549250
(71) Anmelder: DANKWART KLEIN ERDBOHRUNGEN GmbH & Co., BRUNNENBAU KG, D-13507 Berlin (DE)
(72) Erfinder: Geisen, Gerhard, 13503 Berlin (DE)
(74) Vertreter: Wablat, Wolfgang, Dr.Dr.

(57) **Zusammenfassung**

Die Erfindung betrifft eine Vorrichtung zur Ortung von im Boden verborgener Munition mit einem Metalldetektor, mit der eine größere Suchtiefe und insbesondere eine Ortung von durch Rohrleitungen (8) und/oder Erdkabel (9) abgeschirmter Munition (3) möglich ist. Diese Aufgabe wird erfindungsgemäß dadurch gelöst, daß der Metalldetektor in dem Sondenkopf (5) einer Druck- oder Rammsonde (6) angeordnet ist, wobei das Gestänge (7) der Druck- oder Rammsonde (6) aus im wesentlichen nichtmagnetischem Material besteht.

## Beschreibung

Die vorliegende Erfindung betrifft eine Vorrichtung zur Ortung von im Boden verborgener Munition mit einem Metalldetektor.

An vielen Orten liegt im Untergrund scharfe Munition verborgen, die als sogenannte Blindgänger in den Boden eingedrungen sind. Zum Auffinden dieser Munition bzw. zum Überprüfen von Baugrund auf das Vorhandensein eventuell verborgener Munition werden Metallsuchgeräte eingesetzt, welche über die abzusuchende Bodenfläche geführt werden.

Herkömmliche Metallsuchgeräte weisen eine relativ geringe Suchtiefe auf, die etwa bei 4 bis 5 Metern liegt. Tief im Untergrund verborgene Munition kann mit diesen Geräten gelegentlich nicht erfaßt werden. Auch wird das Auffinden verborgener Munition vielfach durch Rohrleitungen und Erdkabel erschwert, die neben oder oberhalb der Munition im Boden verlaufen und diese gegebenenfalls abschirmen. Trotz des Einsatzes von Metallsuchgeräten können daher die von Blindgängern ausgehenden Anomalien mitunter nicht geortet werden.

Der Vollständigkeit halber wird auf ein aus der US 44 43 762 bekanntes Verfahren und eine entsprechende Vorrichtung zur Feststellung der Lage eines ein Stahlrohr (Casing) aufweisenden geplanten Brunnens verwiesen. Die Lagebestimmung des abgeteuften Stahlrohres erfolgt in diesem Fall durch Feststellung der seitlichen Entfernung und der Richtung in bezug auf ein neben der Brunnenbohrung vorgesehenes Hilfsbohrloch, in das eine Vorrichtung zur Erzeugung eines magnetischen Feldes eingesetzt ist, das bei Annäherung an das Stahlrohr entsprechend beeinflußt wird. Die mit einem Magnetometer gemessene Magnetfeldbeeinflussung ist ein Maß für die Lage des geplanten Brunnens. Die Quelle zur Erzeugung des magnetischen Feldes ist in einem Bohrgestänge mit mindestens einem nichtmagnetischen Meißelschaft untergebracht.

Darüber hinaus sind Sensorsysteme aus Sender- und Empfängerspulen zur Durchführung elektromagnetischer Sondierungen bekannt, die unter anderem auch für Messungen in einem Bohrloch eingesetzt werden können (DE 40 00 018 A1).

Als Verfahren zur Bodenuntersuchung ist schließlich auch die Drucksondierung bekannt, bei der mit Hilfe einer in den Boden eingebrachten Spezialsonde geophysikalische und geoelektrische Meßwerte aufgenommen und ausgewertet werden, um daraus Rückschlüsse auf die Bodenbeschaffenheit ziehen zu können (DD 272 713 A1).

Aufgabe der vorliegenden Erfindung ist es, eine Vorrichtung der eingangs genannten Art bereitzustellen, die eine größere Suchtiefe und insbesondere eine Ortung von durch Rohrleitungen und/oder Erdkabel abgeschirmter Munition ermöglicht.

Diese Aufgabe wird erfindungsgemäß bei einer einen Metalldetektor aufweisende Vorrichtung dadurch gelöst, daß der Metalldetektor im Sondenkopf einer Druck- oder Rammsonde angeordnet ist, wobei das Gestänge der Druck- bzw. Rammsonde aus im wesentlichen nichtmagnetischem Material besteht. Mit der erfindungsgemäßen Vorrichtung ist es möglich, im Untergrund verborgene Munition auch in größeren Tiefen zu orten, so daß selbst Munition, die neben oder unterhalb von Rohrleitungen oder Erdkabeln liegt, aufgefunden werden kann.

Bei Bohrungen an Stellen, an denen Blindgänger nicht ausgeschlossen werden können, wird aus Sicherheitsgründen abschnittsweise gebohrt und in vorgegebenen Teufenabschnitten, z. B. alle 1,5 m, das eventuelle Vorhandensein von Munition mit Metalldetektorsonden überprüft. Diese Verfahrensweise ist sehr aufwendig, da bei jeder Überprüfung das Bohrgestänge gezogen und das Bohrloch durch Einbringen von Rohren (Casings) abgestützt werden muß.

Dieses Problem wird durch die erfindungsgemäße Lösung ebenfalls gelöst. Mit der vorgeschlagenen Vorrichtung ist es möglich, Meßsonden in Form von Druck- oder Rammsonden in den Boden zu treiben und dabei eine kontinuierliche, auf eventuelle Anomalien ausgerichtete Messung durchzuführen. Das arbeits- und zeitaufwendige abschnittsweise Bohren und diskontinuierliche Messen entfällt damit.

Eine vorteilhafte Ausgestaltung der erfindungsgemäßen Vorrichtung weist eine mindestens eine Spule umfassende, verstellbare Spulenanordnung auf, mit deren Hilfe ein gerichtetes und in bezug auf die Längsachse des Sondengestänges verschwenkbares Magnetfeld erzeugt werden kann. Auf diese Weise kann eine gleichmäßige Erfassung in alle Richtungen des die Sonde umgebenden Bodens erzielt werden.

Nach einer weiteren vorteilhaften Ausgestaltung ist vorgesehen, daß die Spulenanordnung durch einen oder mehrere Stellmotoren verstellbar ist, die vorzugsweise hydraulisch oder pneumatisch betrieben werden.

Eine weitere vorteilhafte Ausgestaltung der erfindungsgemäßen Vorrichtung besteht darin, daß die Spulenanordnung mit Mitteln gekoppelt ist, welche die räumliche Spulenlage erfassen und zu einer Anzeigeeinrichtung übertragen. Auf diese Weise ist es möglich, die Lage einer erfaßten Anomalie bzw. der vermuteten Munition im Untergrund genau zu peilen.

Nach einer vorteilhaften Weiterbildung der erfindungsgemäßen Lösung weist die Vorrichtung zusätzlich einen Schwinggeber zur Erzeugung seismischer Wellen und ein Geophon zur Erfassung reflektierter Wellen auf. Auf diese Weise ist es möglich, neben der Ortung auch eine Klassifizierung detektierter Metallkörper vorzunehmen, so daß gefährliche Munition von ungefährlichen Metallgegenständen, wie z. B. Metallsplittern unterschieden werden kann.

Weitere Merkmale und Vorteile des Gegenstandes der Erfindung ergeben sich aus den Unteransprüchen und der nachfolgenden Beschreibung.

Im folgenden wird die Erfindung anhand von Ausführungsbeispielen mit Bezug auf die beiliegende Zeichnung näher erläutert. Darin zeigen:
- Figur 1: eine schematische Darstellung einer erfindungsgemäßen Vorrichtung, die mit einem Kraftfahrzeug kombiniert ist;
- Figur 2: eine Seitenansicht eines teilweise geschnitten dargestellten Sondenkopfes; und
- Figur 3: eine Seitenansicht eines teilweise geschnittenen Sondenkopfes gemäß einer weiteren Ausführungsvariante.

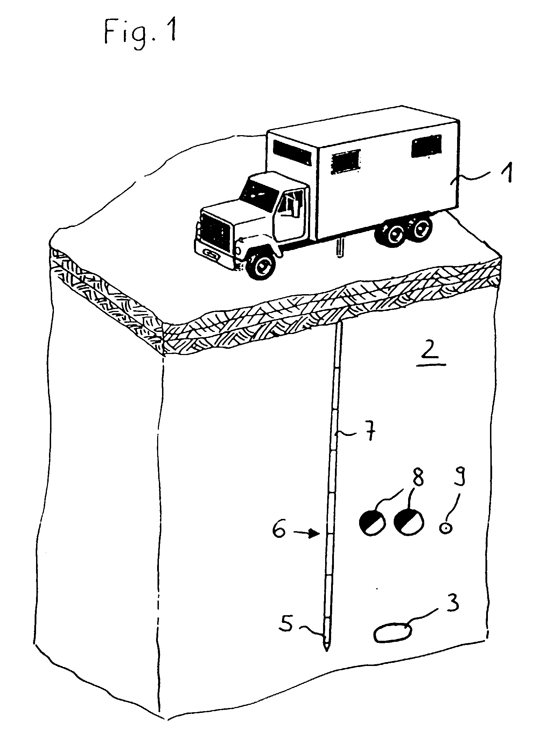

In Figur 1 ist ein Fahrzeug 1 dargestellt, das mit einer erfindungsgemäßen Vorrichtung zur Ortung von im Untergrund 2 verborgener Munition 3 ausgerüstet ist. Das Fahrzeug 1 ist mit Auswerte- und Anzeigeeinrichtungen ausgestattet, die eine unmittelbare Anzeige, Auswertung und Dokumentation der erfaßten Meßdaten erlauben. Die Vorrichtung umfaßt einen Metalldetektor 4, der in dem Sondenkopf 5 einer Druck- oder Rammsonde 6 angeordnet ist. Das Gestänge 7 der Sonde 6 besteht im wesentlichen aus einem nichtmagnetischen Material, wie z. B. Aluminium oder anderen geeigneten Werkstoffen mit ausreichend hoher Festigkeit.

In Figur 1 ist verdeutlicht, daß mit der erfindungsgemäßen Vorrichtung nicht nur vergleichsweise tief gelegene Munition 3, sondern auch solche Munition 3 geortet werden kann, die unterhalb von Rohrleitungen 8 oder Erdkabeln 9 liegt und deshalb mit herkömmlichen über die Oberfläche geführten Metallsuchgeräten nicht erfaßt werden kann.

Der Metalldetektor 4 der erfindungsgemäßen Vorrichtung weist mindestens eine Spule auf, mittels der ein magnetisches Feld erzeugt wird. Dringt beim allmählichen Abteufen der Druck- oder Rammsonde 6 ein Metallkörper in das Magnetfeld der Spule, so ändert sich deren Induktivität. Die Spule ist vorzugsweise Bestandteil eines Parallelschwingkreises, der durch einen Impuls, durch einen Wechselstrom ansteigender Frequenz oder durch einen Wechselstrom nahe oder in der Resonanzfrequenz des Schwingkreises angeregt wird.

Beim Impulsverfahren ändert sich mit der Induktivität der Spule die Resonanzfrequenz des Schwingkreises. Durch Messung der Resonanzfrequenzänderung läßt sich eine Anomalie bzw. verborgene Munition 3 im Untergrund 2 erfassen.

Wird der Parallelschwingkreis durch einen Wechselstrom angeregt, dessen Frequenz kontinuierlich ansteigt, und beim Erreichen der Resonanzfrequenz der Erregerstrom unterbrochen und der Anregungszyklus von neuem gestartet, so ändert sich mit der Induktivität der Spule die Resonanzfrequenz des Parallelschwingkreises und damit der Zeitpunkt, in dem der Erregerstrom die Resonanzfrequenz erreicht. Durch Erfassung der Zyklusdaueränderung läßt sich auf das Vorhandensein von Metallkörpern in der Umgebung der Druck- oder Rammsonde 6 schließen.

Wird dagegen der Parallelschwingkreis durch einen Wechselstrom nahe oder in der Resonanzfrequenz angeregt, so ändert sich beim Eindringen eines Metallkörpers in das magnetische Feld der Spule neben deren Induktivität auch die Impedanz des Parallelschwingkreises. Durch die Messung der Impedanzänderung läßt sich wiederum auf das Vorhandensein verborgener Munition 3 im Untergrund 2 schließen.

Alternativ kann der Metalldetektor 4 der erfindungsgemäßen Vorrichtung auch mit einem Spulensystem ausgestattet sein, das aus einer ersten Spule (Erregerspule) 11 und einer zweiten Spule (Empfängerspule) 12 besteht, wobei die erste Spule 11 ein Magnetfeld erzeugt, das von der zweiten Spule 12 gemessen wird. Dabei ist die zweite Spule 12 (Empfängerspule) derart angeordnet, daß darin eine elektromotorische Kraft induziert wird, wenn die Spule 12 von dem von einem Metallkörper ausgehenden Feld und dem unmittelbar von der ersten Spule 11 erzeugten Feld beeinflußt wird.

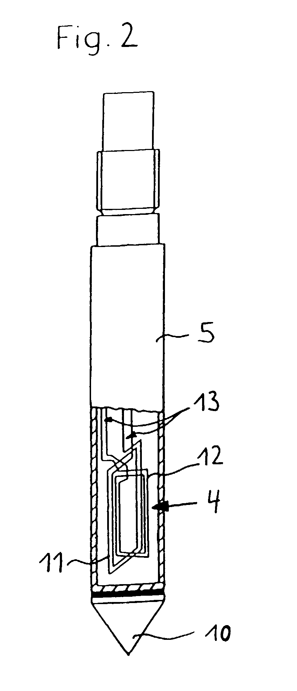

In Figur 2 ist schematisch ein Sondenkopf 5 dargestellt, der nahe der Sondenkopfspitze 10 einen aus einem Spulenpaar gebildeten Metalldetektor 4 aufweist. Die beiden Spulen 11 und 12 sind rechtwinklig zueinander angeordnet, und zwar derart, daß ihre Mittelachsen jeweils rechtwinklig zur Längsmittelachse des Sondenkopfes 5 liegen.

Die mit der Bezugsziffer 11 bezeichnete Spule ist über Zuleitungen 13 an eine (nicht dargestellte) Wechselstromquelle angeschlossen und erzeugt ein elektromagnetisches Wechselfeld, welches in der zweiten Spule 12 eine elektrische Wechselspannung induziert, die in einer übertägig angeordneten Auswerteeinrichtung verarbeitet wird. Die in der zweiten Spule 12 induzierte Wechselspannung ändert sich, sobald in das mittels der ersten Spule 11 erzeugte elektromagnetische Feld ein Metallkörper eindringt.

Die Spulen 11 und 12 sind in einem (nicht dargestellten) Verstellmechanismus gelagert, mittels dem das gerichtete elektromagnetische Feld der Erregerspule 11 in bezug auf die Längsachse des Sondenkopfes 5 in beliebige Richtungen verschwenkt werden kann. Hierzu können innerhalb des Sondenkopfes 5 Stellmotoren angeordnet sein, so daß die Verstellung der Spulenanordnung während des Eindringens des Sondenkopfes 5 in den Untergrund vorgenommen werden kann.

Darüber hinaus können (nicht dargestellte) Mittel vorgesehen sein, welche die räumliche Spulenlage ertassen und diese zu der übertägig angeordneten Anzeigeeinrichtung übertragen. Durch diese Ausgestaltung läßt sich die Position einer detektierten Anomalie sehr genau peilen, wobei deren Teufe anhand der Länge des in den Boden eingetriebenen Gestänges 7 bestimmbar ist.

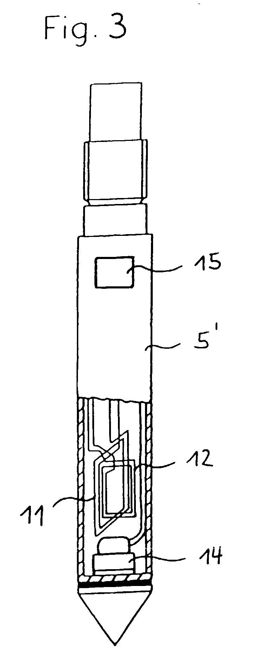

Figur 3 zeigt schematisch einen Sondenkopf 5' gemäß einer Weiterbildung der erfindungsgemäßen Vorrichtung. Der Sondenkopf 5' weist ebenfalls ein Spulensystem 11', 12' auf, ist darüber hinaus aber zusätzlich mit einem Schwinggeber 14 zur Erzeugung seismischer Wellen und einem Geophon 15 zur Erfassung reflektierter Wellen ausgerüstet. Diese Ausgestaltung hat den Vorteil, daß neben der Ortung auch eine Klassifizierung eines detektierten Metallkörpers durchgeführt werden kann.

Das Geophon 15 ist zu diesem Zweck an eine (nicht dargestellte) Auswerteeinheit angeschlossen, in der die Auswertung der reflektierten Wellen durch Korrelation mit den vom Schwinggeber emittierten Wellen erfolgt, wobei insbesondere die Größe und Form des detektierten Körpers ermittelt und angezeigt werden.

Die Erfindung beschränkt sich in ihrer Ausführung nicht auf die vorstehend angegebenen Ausführungsbeispiele. Vielmehr sind weitere Varianten möglich, die von der dargestellten Lösung auch bei grundsätzlich anders gearteten Ausführungen Gebrauch machen.

### Bezugszeichenliste

- 1: Fahrzeug
- 2: Untergrund
- 3: Munition (Blindgänger)
- 4: Metalldetektor
- 5, 5': Sondenkopf
- 6: Druck- oder Rammsonde
- 7: Gestänge
- 8: Rohrleitung
- 9: Erdkabel
- 10: Sondenkopfspitze
- 11, 11': erste Spule (Erregerspule)
- 12, 12': zweite Spule (Empfängerspule)
- 13: Zuleitungen
- 14: Schwinggeber
- 15: Geophon

## Patentansprüche

1. Vorrichtung zur Ortung von im Boden verborgener Munition mit einem Metalldetektor, dadurch gekennzeichnet, daß der Metalldetektor (4) im Sondenkopf (5) einer Druck- oder Rammsonde (6) angeordnet ist, wobei das Gestänge (7) der Druck- oder Rammsonde (6) aus im wesentlichen nichtmagnetischem Material besteht.

2. Vorrichtung nach Anspruch 1, dadurch gekennzeichnet, daß der Metalldetektor (4) mittels einer Spule ein Magnetfeld erzeugt, dessen Änderung durch eine Induktivitätsänderung der Spule gemessen wird.

3. Vorrichtung nach Anspruch 1, dadurch gekennzeichnet, daß der Metalldetektor mittels einer ersten Spule (11) ein Magnetfeld erzeugt, das von einer zweiten Spule (12) des Metalldetektors (4) gemessen wird.

4. Vorrichtung nach einem der vorangehenden Ansprüche, dadurch gekennzeichnet, daß eine mindestens eine Spule umfassende verstellbare Spulenanordnung (11, 12) vorgesehen ist, mit deren Hilfe ein gerichtetes und in bezug auf die Längsachse des Gestänges (7) schwenkbares Magnetfeld erzeugt werden kann.

5. Vorrichtung nach Anspruch 4, dadurch gekennzeichnet, daß die Spulenanordnung durch einen oder mehrere Stellmotoren verstellbar ist.

6. Vorrichtung nach Anspruch 5, dadurch gekennzeichnet, daß der oder die Stellmotoren hydraulisch oder pneumatisch betrieben werden.

7. Vorrichtung nach einem der Ansprüche 4 bis 6, dadurch gekennzeichnet, daß die Spulenanordnung mit Mitteln gekoppelt ist, welche die räumliche Spulenlage erfassen und diese zu einer Anzeigeeinrichtung übertragen.

8. Vorrichtung nach einem der vorangehenden Ansprüche, dadurch gekennzeichnet, daß die Vorrichtung einen Schwinggeber (14) zur Erzeugung seismischer Wellen und ein Geophon (15) zur Erfassung reflektierter Wellen aufweist.
